# EUROPEAN PATENT SPECIFICATION

(11) **EP 3 432 765 B1**
(45) Date of publication and mention of the grant of the patent: **13.11.2019**
(21) Application number: 17718428.0
(22) Date of filing: 23.03.2017
(51) Int. Cl.: A47D 13/02, B62B 7/14

(54) **COT, DEVICE WITH COT AND METHOD**
KINDERBETT, VORRICHTUNG MIT KINDERBETT UND VERFAHREN
BERCEAU, DISPOSITIF COMPORTANT UN BERCEAU ET PROCÉDÉ CORRESPONDANT

(30) Priority: 24.03.2016 NL 2016492
(43) Date of publication of application: 30.01.2019
(73) Proprietor: Mutsy B.V., 5051 HT Goirle (NL)
(72) Inventor: DRIESSEN, Franciscus Johannes Cornelius, 5051 DA Goirle (NL)
(74) Representative: Jacobs, Bart
(86) International application number: PCT/NL2017/050183
(87) International publication number: WO 2017/164739

(56) References cited:
- FR-A1- 2 507 957
- GB-A- 2 320 437
- US-A- 3 466 677
- US-A1- 2008 229 496

## Description

The present invention relates to a cot, and to a device for transporting a child which is provided with such a cot. The invention further relates to a method for manufacturing a cot. The invention relates particularly to a so-called carrycot. Such a cot is easily displaceable, for instance in that it is provided with a carrier arm or in that it can be coupled to a frame of a buggy or pushchair.

A carrycot generally comprises a hard base with a framework of metal or aluminium tubes thereon, around which the fabric is stretched. The framework is provided on the outer side thereof with a covering fabric. An inner lining can usually be coupled on the inner side, for instance by means of press-studs or Velcro®. This provides the advantage that the inner lining can be detached from the carrycot. This makes it possible to wash the inner lining.

The covering fabric fastened to the outer side of the framework usually cannot be detached from the framework, or only with great difficulty. The main objective of this fabric is therefore of a more aesthetic nature. It is important here for the covering fabric to lie tightly against the framework, without folds or wrinkles forming in the fabric.

It has been found that the covering fabric does not lie sufficiently tightly against the framework in the known cot. A further drawback lies in the fact that a smooth finish of the covering fabric is usually difficult to achieve, that it requires a lot of manual work and that the production variation in respect of finishing is therefore relatively great. The freedom of form is further very limited when a framework is used.

A cot as defined by the preamble of claim 1 is known from US 2008/229496 A1.

The present invention has for its object to provide a solution for at least one of the above stated problems.

This object is achieved by means of the cot as defined in claim 1. According to the present invention, the cot comprises a substantially rigid tensioning frame and a flexible covering fabric, an edge of which is fixedly connected to the tensioning frame, whereby the tensioning frame and the flexible covering fabric form a first shell. According to the invention, the cot comprises a second, substantially firm shell which is provided on an upper side with a peripheral edge, this peripheral edge lying against the tensioning frame, wherein the second shell is clamped between the tensioning frame and the covering fabric and wherein the covering fabric covers an outer surface of the second shell.

In the context of the invention covering fabric is understood to mean any material which is generally used to finish a cot or carrycot. This includes natural fabrics such as cotton, wool, silk or linen, but also synthetic fabrics such as polyamide, polyester, polyacrylic, aramid or elastane, and also other types of flexible finishing material.

The tensioning frame takes a rigid form. It hereby retains its shape after the covering fabric is coupled thereto.

In order to make placing of the second shell relatively simple it is advantageous for the tensioning frame to take a sufficiently stiff form so that the second shell can be placed closely against the tensioning frame.

The second shell is substantially firm. In the context of the invention a firm shell is understood to mean a shell which does not change shape, or hardly so, during manufacture of the cot.

It is preferred for a separating line to be arranged or made in the covering fabric, along which line covering fabric parts lying on either side of the separating line are not integrally connected to each other. Such a separating line can for instance be achieved by cutting the fabric. It is further preferred for the cot to comprise coupling means which are arranged at the position of the separating line and which couple the covering fabric parts to each other.

In the above stated embodiment the tensioning frame holds the covering fabric spread apart during manufacture of the cot, whereby a first shell is formed. This first shell is however provided on the underside with an opening, or such an opening can be realized. The second shell is inserted through this opening and placed against the tensioning frame. The opening is then closed using the coupling means, and the second shell is clamped. The covering fabric can be arranged tightly around the second shell by coupling the covering fabric parts to each other by means of the coupling means. The second shell is clamped between the covering fabric and the tensioning frame as a result of the coupling of the covering fabric parts.

Because the second shell and the tensioning frame have a fixed form, the covering fabric can be made to measure beforehand so that it comes to lie against the second shell with optimal tightness. In addition to this dimensional stability in respect of the amount of fabric to be used, the present invention and particularly the above stated embodiment has the further advantage that the covering fabric can be placed under greater average tension by the manner in which the opening is closed. It has been found that it is easy with the present invention to place the covering fabric tightly against the second shell over large surface areas at the same time.

The coupling means can comprise a first part and a second part, which parts are each fixedly connected to a different covering fabric part. The coupling means can further be releasable coupling means such as a zip, press-studs or Velcro®. The two coupling parts comprise a pair of co-acting parts. These parts can become or can be fixedly connected to the different covering fabric parts. The advantage of releasable coupling means compared to other, permanent coupling means such as rivets or glue is that these means create the option of removing the second shell if necessary. If desired, the covering fabric can hereby be cleaned separately of the second shell. This can be advantageous if cleaning agents to which the material of the second shell is not resistant are used to clean the covering fabric.

The tensioning frame is preferably a frame which is closed in a peripheral direction of the cot. It is for instance possible to embody the tensioning frame as a closed edge structure, such as an oval ring. The tensioning frame can further comprise a profile, such as a U-shaped or V-shaped profile, as seen in a cross-section perpendicularly of the peripheral direction of the cot. The peripheral edge of the second shell is at least partially received in this profile. In the case of a U-shaped profile the peripheral edge for instance rests against the flat part of the profile which lies between the parallel, extending parts of the profile.

The cot can comprise a seam by which the tensioning frame and the covering fabric are mutually connected, for instance by means of stitching. The peripheral edge of the second shell can here comprise a recessed portion in which the seam is received. The seam can hereby be concealed in a substantially invisible manner. The peripheral edge of the second shell can for example comprise a first protruding part which is received at least partially in the profile, and the peripheral edge can also comprise a second protruding part, wherein the recessed portion is formed between the first and second protruding part. The second protruding part is preferably arranged closer to an outer side of the cot than the first protruding part. The outer side of the cot is here the side facing away from the child in the cot, and the upper side of the cot corresponds to the open side of the shell.

The second shell can be formed integrally. The second shell can for example be formed from one or more of the materials from the group consisting of expanded polypropylene (EPP), expanded polystyrene (EPS) and polyurethane foam.

The tensioning frame can be embodied as a plastic frame. It can for instance be manufactured from ethylene vinyl acetate (EVA), preferably by means of a thermoforming technique. This material is suitable because the covering fabric can be stitched to the tensioning frame in simple manner with this material. The invention however does not preclude other materials for the tensioning frame. Further possible materials are for instance PU foam, ABS, Polystyrene and neoprene.

The covering fabric can comprise one or more materials from the group consisting of cotton, wool, silk or linen, but also synthetic fabrics such as polyamide, polyester, polyacrylic, aramid or elastane.

The second shell can comprise one or more openings. In this case the cot further comprises one or more clamping structures for clamping the covering fabric onto the second shell, and fastening means for fastening the clamping structures to the second shell through the one or more openings. The fastening means can here comprise a rivet such as a solid rivet or pop rivet.

In a further embodiment the one or more clamping structures comprise a pair of co-acting clamping parts, wherein the fastening means are preferably fixedly coupled or integrally connected to at least one clamping part. By making use of a pair of clamping parts the covering fabric can be clamped onto the second shell between these parts.

In addition to the above stated clamping structures, the cot can also comprise common fastening means for fastening the covering fabric to the second shell. Examples hereof are rivets and/or glue.

The cot can be provided with a carrier arm with which the cot can be carried. The one or more clamping structures can here comprise fixing points for the carrier arm. In addition to this or instead of this the one or more clamping structures can comprise support structures for placing the cot on a surface.

The cot is preferably embodied as a carrycot. It is preferred here for the cot to comprise an inner lining which is coupled releasably to the second shell or the tensioning frame, for instance by means of press-studs.

The invention also provides a device for transporting a child, such as a pushchair or buggy, comprising a frame and a cot as described above, wherein the cot is preferably coupled releasably to the frame.

The invention also relates to a method for manufacturing a cot, comprising the steps of providing a substantially rigid tensioning frame, providing a flexible covering fabric, an edge of which is fixedly connected to the tensioning frame, whereby the tensioning frame and the flexible covering fabric form a first shell, wherein a separating line is arranged or made in the covering fabric, along which line covering fabric parts lying on either side of the separating line are not integrally connected to each other, and wherein coupling means are arranged at the position of the separating line for coupling the covering fabric parts to each other. The method further comprises of providing a second, substantially firm shell which is provided on an upper side with a peripheral edge, bringing or holding the coupling means into or in an opened state, whereby an opening is created in the covering fabric, placing the second shell through the opening and placing the peripheral edge of the second shell connecting against the tensioning frame, and bringing the coupling means into a closed state such that the second shell is clamped between the tensioning frame and the covering fabric and such that the covering fabric covers an outer surface of the second shell.

The present invention will be elucidated in more detail hereinbelow with reference to the accompanying figures, wherein:
Figure 1 shows an exploded view of an embodiment of a cot assembly according to the invention;
Figure 2 shows a partially cut-away view of a cot formed by means of the cot assembly of figure 1;
Figure 3 shows a detail view of the coupling between the first shell, the second shell and the covering fabric in the cot of figure 2; and
Figure 4 shows a pushchair in which the cot of figure 2 is placed.

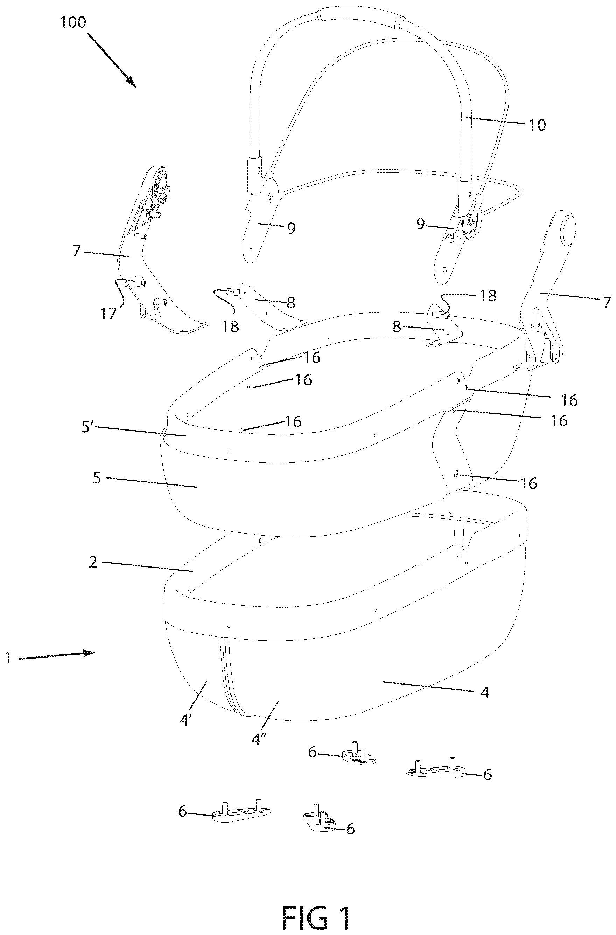

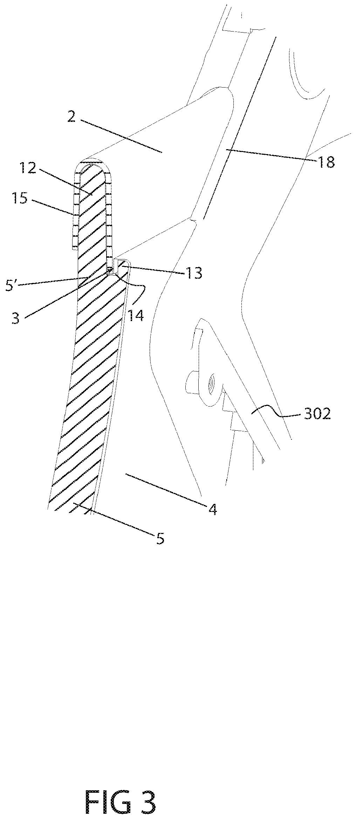

Figure 1 shows various parts of a cot assembly 100 according to the invention. This assembly comprises a first shell 1 which is formed by a rigid tensioning frame 2 and a flexible covering fabric 4 coupled to tensioning frame 2. Tensioning frame 2 comprises a thermoformed edge manufactured from EVA foam. This edge is coupled at a seam 3 (see figure 3) to covering fabric 4, in this embodiment consisting of an elastane.

The assembly also comprises a second, substantially firm shell 5 manufactured from EPP, and a plurality of clamping structures 6-9. With these latter structures covering fabric 4 can be clamped against second shell 5.

Covering fabric 4 comprises a separating line along which the fabric has been cut. As a result of the cutting, covering fabric 4 comprises two parts 4', 4". These parts are mutually coupled by means of a zip 11.

In order to assemble a cot 200 with assembly 100 of figure 1 the following steps are followed. Firstly, zip 11 is opened in the case it is still closed. This creates an opening in first shell 1. Second shell 5 is then inserted through the opening from the underside of first shell 1, i.e. as according to arrow 20, and placed with its peripheral edge 5' up against tensioning frame 2. Zip 11 is then closed, whereby second shell 5 is clamped between tensioning frame 2 and covering fabric 4.

Figure 3 shows an example of an embodiment of second shell 5. This comprises a first protruding part 12, a second protruding part 13 and a recessed portion 14 between parts 12, 13. Part 12 protrudes here into tensioning frame 2, which has a U-shaped profile 15. The co-action of protruding part 13 and recessed portion 14 creates the option of concealing seam 3 in recessed portion 14.

Once second shell 5 has been placed and zip 11 has been closed, covering fabric 4 is further fastened to second shell 5 by means of clamping structures 6-9. Second shell 5 is provided for this purpose with a plurality of openings 16. Clamping structures 6-9 are coupled to second shell 5 through openings 16 by means of fastening means.

Figure 1 shows a clamping structure 7 which is provided with a fastening means 17 in the form of a pin or sleeve. This structure can co-act with clamping structure 8, which likewise comprises a fastening means 18 in the form of a pin or sleeve. Covering fabric 4 can now be clamped against second shell 5 by allowing fastening means 17 and 18 to couple to each other through openings 16. It will be apparent to the skilled person that other fastening means are possible for coupling a clamping structure. Clamping structures 6, which serve as support, can thus be clamped by making use of rivets.

As follows from figure 1, clamping structure 7 co-acts with an underside 9 of a carrier arm 10. This means that the clamping of covering fabric 4 by means of structures 7 and 9 likewise ensures the fixing of carrier arm 10 to second shell 5.

With the above described method and assembly it is possible to obtain a very tight clamping of covering fabric 4 onto second shell 5 in relatively simple manner. A very light cot can further be obtained by using EPP or EPS.

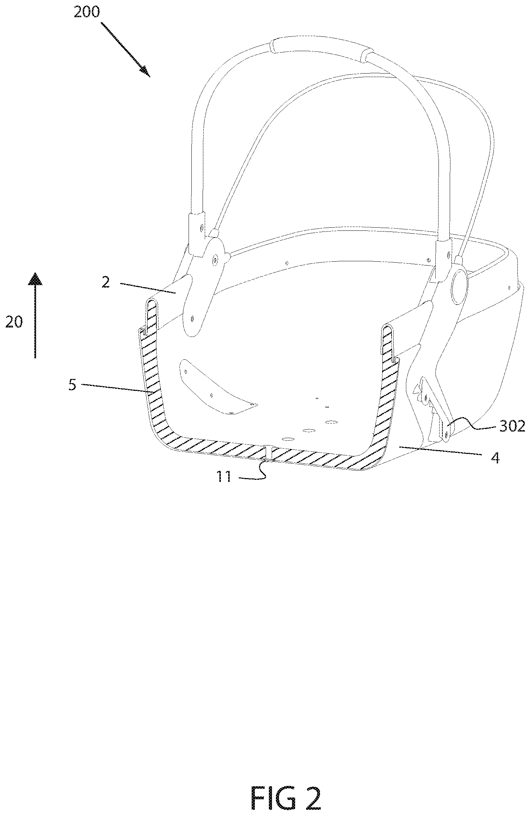

As is visible in figures 2 and 3, the height difference between first and second protruding parts 12, 13 results in a stop 18. A cover for the cot can for instance be placed (not shown) on this stop. After being placed, this cover can come to lie in line with covering fabric 4 on the outer side of the cot, whereby an aesthetically attractive whole is obtained. The inner side of the cot can also be coupled in known manner to known inner lining.

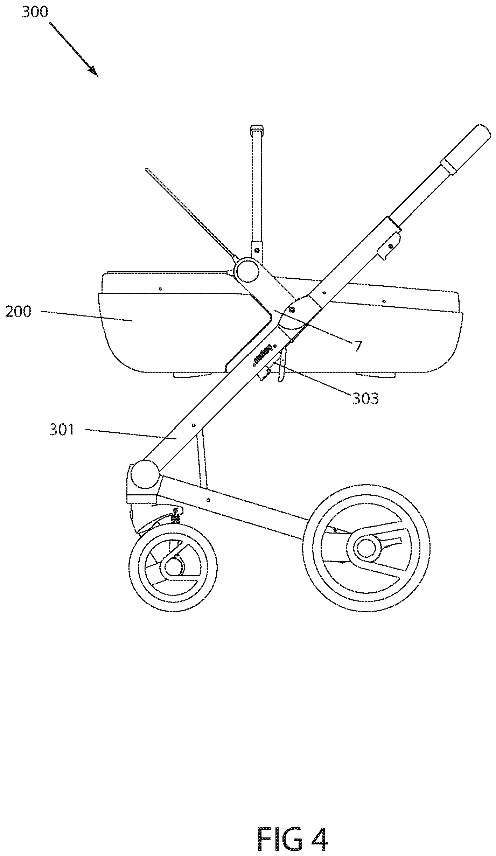

Figure 4 shows a pushchair 300 comprising a frame 301 and cot 200. Clamping structure 7 of cot 200 is provided here with per se known coupling structures 302 for coupling to corresponding coupling structures 303, which are connected to frame 301. The coupling between cot 200 and frame 301 is preferably such that cot 200 can be coupled to and uncoupled from frame 301 in simple manner.

It will be apparent to the skilled person that various modifications to the above described embodiments are possible without departing from the scope of protection as defined by the appended claims.

## Claims

1. A cot (200) for a child, comprising:
a substantially rigid tensioning frame (2);
a flexible covering fabric (4), an edge of which is fixedly connected to the tensioning frame, whereby the tensioning frame and the flexible covering fabric form a first shell (1);
a second, substantially firm shell (5), wherein the covering fabric covers an outer surface of the second shell;
**characterized in that** the second shell is provided on an upper side with a peripheral edge (5'), this peripheral edge lying against the tensioning frame, wherein the second shell is clamped between the tensioning frame and the covering fabric.

2. The cot according to claim 1, wherein a separating line is arranged or made in the covering fabric, along which line covering fabric parts (4', 4") lying on either side of the separating line are not integrally connected to each other, the cot further comprising coupling means (11) which are arranged at the position of the separating line and which couple the covering fabric parts to each other.

3. The cot according to claim 2, wherein the coupling means comprise a first part and a second part, which parts are each fixedly connected to a different covering fabric part, wherein the coupling means are releasable coupling means such as a zip (11) or Velcro®.

4. The cot according to any of the foregoing claims, wherein the tensioning frame is a frame which is closed in a peripheral direction of the cot.

5. The cot according to claim 4, wherein the tensioning frame has a profile (15), such as a U-shaped or V-shaped profile, as seen in a cross-section perpendicularly of the peripheral direction of the cot, and in which profile the peripheral edge of the second shell is at least partially received.

6. The cot according to any of the foregoing claims, comprising a seam (3) by which the tensioning frame and the covering fabric are mutually connected, wherein the peripheral edge of the second shell has a recessed portion (14) in which the seam is received.

7. The cot according to claim 5 or 6, wherein the peripheral edge of the second shell has a first protruding part (12) which is received at least partially in the profile and a second protruding part (13), wherein the recessed portion is formed between the first and second protruding part, wherein the second protruding part is arranged closer to an outer side of the cot than the first protruding part.

8. The cot according to any of the foregoing claims, wherein the tensioning frame is a plastic frame, wherein the tensioning frame is manufactured from ethylene vinyl acetate (EVA), preferably by means of a thermoforming technique.

9. The cot according to any of the foregoing claims, wherein the second shell is formed integrally, wherein the second shell is formed from one or more of the materials from the group consisting of expanded polypropylene (EPP), expanded polystyrene (EPS) and polyurethane foam.

10. The cot according to any of the foregoing claims, wherein the covering fabric comprises one or more materials from the group consisting of natural fabrics such as cotton, wool, silk or linen, but also synthetic fabrics such as polyamide, polyester, polyacrylic, aramid or elastane.

11. The cot according to any of the foregoing claims, wherein the second shell comprises one or more openings (16), the cot further comprising:
one or more clamping structures (6, 7, 8, 9) for clamping the covering fabric onto the second shell;
fastening means (17, 18) for fastening the clamping structures to the second shell through the one or more openings.

12. The cot according to claim 11, wherein:
the fastening means comprise a rivet, such as a solid rivet or pop rivet;
the one or more clamping structures (7, 8, 9) comprise a pair of co-acting clamping parts (7, 8, 9), wherein the fastening means (17, 18) are preferably fixedly coupled or integrally connected to at least one clamping part; and/or
the cot further comprises a carrier arm (10) with which the cot can be carried, and wherein the one or more clamping structures comprise fixing points for the carrier arm; and/or
the one or more clamping structures comprise support structures for placing the cot on a surface.

13. The cot according to any of the foregoing claims, wherein the cot is embodied as a carrycot, wherein the cot comprises an inner lining which is coupled releasably to the second shell or the tensioning frame.

14. A device (300) for transporting a child, such as a pushchair or buggy, comprising a frame and a cot as defined in any of the foregoing claims, wherein the cot is preferably coupled releasably to the frame.

15. Method for manufacturing a cot, comprising of:
providing a substantially rigid tensioning frame;
providing a flexible covering fabric, an edge of which is fixedly connected to the tensioning frame, whereby the tensioning frame and the flexible covering fabric form a first shell, wherein a separating line is arranged or made in the covering fabric, along which line covering fabric parts lying on either side of the separating line are not integrally connected to each other, and wherein coupling means are arranged at the position of the separating line for coupling the covering fabric parts to each other;
providing a second, substantially firm shell which is provided on an upper side with a peripheral edge;
bringing or holding the coupling means into or in an opened state, whereby an opening is created in the covering fabric;
placing the second shell through the opening and placing the peripheral edge of the second shell connecting against the tensioning frame;
bringing the coupling means into a closed state such that the second shell is clamped between the tensioning frame and the covering fabric and such that the covering fabric covers an outer surface of the second shell.

## Patentansprüche

1. Kinderbett (200) für ein Kind, das aufweist:
einen im Wesentlichen starren Spannrahmen (2);
ein flexibles Bespanngewebe (4), wobei eine Kante davon fest mit dem Spannrahmen verbunden ist, wodurch der Spannrahmen und das flexible Bespanngewebe eine erste Ummantelung (1) bilden;
eine zweite im Wesentlichen feste Ummantelung (5), wobei das Bespanngewebe eine Außenseite der zweiten Ummantelung abdeckt;
**dadurch gekennzeichnet, dass** die zweite Ummantelung an einer Oberseite mit einer Umfangskante (5') vorgesehen ist, wobei die Umfangskante gegen den Spannrahmen anliegt, wobei die zweite Ummantelung zwischen dem Spannrahmen und dem Bespanngewebe eingespannt ist.

2. Kinderbett nach Anspruch 1, wobei eine Trennlinie angeordnet ist oder im Bespanngewebe hergestellt ist, wobei entlang der Linie Teile (4', 4") des Bespanngewebes, die an beiden Seiten der Trennlinie liegen, nicht integral miteinander verbunden sind, wobei das Kinderbett weiterhin Kopplungsmittel (11) aufweist, die an der Position der Trennlinie angeordnet sind und die die Teile des Bespanngewebes miteinander koppeln.

3. Kinderbett nach Anspruch 2, wobei die Kopplungsmittel ein erstes Teil und ein zweites Teil aufweisen, wobei die Teile jeweils feststehend mit einem anderen Teil des Bespanngewebes verbunden sind, wobei die Kopplungsmittel lösbare Kopplungsmittel sind, wie ein Reißverschluss (11) oder Velcro®.

4. Kinderbett nach einem der vorhergehenden Ansprüche, wobei der Spannrahmen ein Rahmen ist, der in einer Umfangsrichtung des Kinderbetts geschlossen ist.

5. Kinderbett nach Anspruch 4, wobei der Spannrahmen in einem Querschnitt senkrecht zur Umfangsrichtung des Kinderbetts betrachtet ein Profil (15), wie ein U-förmiges oder V-förmiges Profil hat, und wobei in dem Profil die Umfangskante der zweiten Ummantelung wenigstens teilweise aufgenommen wird.

6. Kinderbett nach einem der vorhergehenden Ansprüche, das einen Saum (3) aufweist, durch den der Spannrahmen und das Bespanngewebe miteinander verbunden sind, wobei die Umfangskante der zweiten Ummantelung einen Aussparungsbereich (14) aufweist, in dem der Saum aufgenommen ist.

7. Kinderbett nach Anspruch 5 oder 6, wobei die Umfangskante der zweiten Ummantelung ein erstes hervorstehendes Teil (12) hat, das wenigstens teilweise im Profil aufgenommen ist und ein zweites hervorstehendes Teil (13), wobei der Aussparungsbereich zwischen dem ersten und zweiten hervorstehenden Teil ausgebildet ist, wobei das zweite hervorstehende Teil näher an der Außenseite des Kinderbetts angeordnet ist als das erste hervorstehende Teil.

8. Kinderbett nach einem der vorhergehenden Ansprüche, wobei der Spannrahmen ein Plastikrahmen ist, wobei der Spannrahmen hergestellt ist aus Ethylenvinylacetat (EVA), vorzugsweise mittels eines Thermoformverfahrens.

9. Kinderbett nach einem der vorhergehenden Ansprüche, wobei die zweite Ummantelung integral ausgebildet ist, wobei die zweite Ummantelung aus einem oder mehreren der Materialien ausgebildet ist aus der Gruppe bestehend aus expandiertem Polypropylen (EPP), expandiertem Polystyrol (EPS) und Polyurethanschaum.

10. Kinderbett nach einem der vorhergehenden Ansprüche, wobei das Bespanngewebe ein oder mehrere Materialien aus der Gruppe aufweist, die besteht aus natürlichen Geweben, wie Baumwolle, Wolle, Seide oder Leinen, aber auch aus synthetischen Geweben, wie Polyamid, Polyester, Polyacryl, Aramid oder Elastan.

11. Kinderwagen nach einem der vorhergehenden Ansprüche, wobei die zweite Ummantelung eine oder mehrere Öffnungen (16) aufweist, wobei das Kinderbett weiterhin aufweist:
eine oder mehrere Einspannstrukturen (6, 7, 8, 9), um das Bespanngewebe auf der zweiten Ummantelung einzuspannen;
Befestigungsmittel (17, 18), um die Einspannstrukturen an der zweiten Ummantelung durch die eine oder mehreren Öffnungen zu befestigen.

12. Kinderwagen nach Anspruch 11, wobei:
die Befestigungsmittel eine Niete aufweisen, wie eine Vollniete oder Blindniete;
wobei die eine oder die mehreren Einspannstrukturen (7, 8, 9) ein Paar von zusammenwirkenden Einspannteilen (7, 8, 9) aufweisen, wobei die Befestigungsmittel (17, 18) vorzugsweise fest gekoppelt oder integral mit wenigstens einem Einspannteil verbunden sind;
und/oder
das Kinderbett weiterhin einen Trägerarm (10) aufweist, mit dem das Kinderbett getragen werden kann, und wobei die eine oder die mehreren Einspannstrukturen Befestigungspunkte für den Trägerarm aufweisen; und oder
die eine oder die mehreren Einspannstrukturen Haltestrukturen zum Anordnen des Kinderbetts auf einer Fläche aufweisen.

13. Kinderbett nach einem der vorhergehenden Ansprüche, wobei das Kinderbett als ein tragbares Kinderbett ausgeführt ist, wobei das Kinderbett eine Innenverkleidung aufweist, die lösbar mit der zweiten Ummantelung oder dem Spannrahmen gekoppelt ist.

14. Vorrichtung (300) zum Transportieren eines Kindes, wie ein Kinderwagen oder Buggy, der einen Rahmen und ein Kinderbett wie in einem beliebigen der vorhergehenden Ansprüche definiert aufweist, wobei das Kinderbett vorzugsweise lösbar mit dem Rahmen gekoppelt ist.

15. Verfahren zur Herstellung eines Kinderbetts, das aufweist:
Vorsehen eines im Wesentlichen starren Spannrahmens;
Vorsehen eines flexiblen Bespanngewebes, wobei eine Kante davon fest mit dem Spannrahmen verbunden ist, wodurch der Spannrahmen und das flexible Bespanngewebe eine erste Ummantelung bilden,
wobei eine Trennlinie angeordnet ist oder in dem Bespanngewebe hergestellt ist, wobei entlang der Linie Teile des Bespanngewebes, die an beiden Seiten der Trennlinie liegen, nicht integral miteinander verbunden sind, und wobei Kopplungsmittel an der Position der Trennlinie angeordnet sind, um die Teile des Bespanngewebes miteinander zu koppeln;
Vorsehen einer zweiten, im Wesentlichen festen Ummantelung, die an einer Oberseite mit einer Umfangskante vorgesehen ist;
Bringen der Kopplungsmittel in oder Halten der Kopplungsmittel in einem geöffneten Zustand, wobei eine Öffnung im Bespanngewebe erstellt wird;
Anordnen der zweiten Ummantelung durch die Öffnung und Anordnung der Umfangskante der zweiten Ummantelung zum Verbindung gegen den Spannrahmen;
Bringen der Kopplungsmittel in einen geschlossenen Zustand, sodass die zweite Ummantelung zwischen dem Spannrahmen und dem Bespanngewebe eingespannt ist und so, dass das Bespanngewebe eine Außenseite der zweiten Ummantelung abdeckt.

## Revendications

1. Berceau (200) pour un enfant, comprenant :
un cadre de mise en tension (2) sensiblement rigide ;
un tissu de revêtement (4) souple, dont un bord est relié à demeure au cadre de mise en tension, moyennant quoi le cadre de mise en tension et le tissu de revêtement souple forment une première coque (1) ;
une seconde coque (5) sensiblement ferme, dans lequel le tissu de revêtement couvre une surface externe de la seconde coque ;
**caractérisé en ce que** la seconde coque est pourvue sur un côté supérieur d'un bord périphérique (5'), ce bord périphérique reposant contre le cadre de mise en tension, dans lequel la seconde coque est serrée entre le cadre de mise en tension et le tissu de revêtement.

2. Berceau selon la revendication 1, dans lequel une ligne de séparation est agencée ou fabriquée dans le tissu de revêtement, ligne le long de laquelle des parties de tissu de revêtement (4', 4") reposant de chaque côté de la ligne de séparation ne sont pas reliées d'un seul tenant entre elles, le berceau comportant en outre des moyens de couplage (11) qui sont agencés au niveau de la position de la ligne de séparation et qui couplent les parties de tissu de revêtement l'une à l'autre.

3. Berceau selon la revendication 2, dans lequel les moyens de couplage comprennent une première partie et une seconde partie, lesquelles parties sont chacune reliées à demeure à une partie de tissu de revêtement différente, dans lequel les moyens de couplage sont des moyens de couplage libérables tels qu'une fermeture à glissière (11) ou du Velcro®.

4. Berceau selon l'une quelconque des revendications précédentes, dans lequel le cadre de mise en tension est un cadre qui est fermé dans une direction périphérique du berceau.

5. Berceau selon la revendication 4, dans lequel le cadre de mise en tension a un profil (15), tel qu'un profil en forme de U ou en forme de V, vu en coupe transversale perpendiculairement à la direction périphérique du berceau, et profil dans lequel le bord périphérique de la seconde coque est au moins partiellement reçu.

6. Berceau selon l'une quelconque des revendications précédentes, comprenant une couture (3) grâce à laquelle le cadre de mise en tension et le tissu de revêtement sont mutuellement reliés, dans lequel le bord périphérique de la seconde coque a une portion évidée (14) dans laquelle la couture est reçue.

7. Berceau selon la revendication 5 ou 6, dans lequel le bord périphérique de la seconde coque a une première partie saillante (12) qui est reçue au moins partiellement dans le profil et une seconde partie saillante (13), dans lequel la portion évidée est formée entre les première et seconde parties saillantes, dans lequel la seconde partie saillante est agencée plus près d'un côté externe du berceau que la première partie saillante.

8. Berceau selon l'une quelconque des revendications précédentes, dans lequel le cadre de mise en tension est un cadre en plastique, dans lequel le cadre de mise en tension est fabriqué à partir d'éthylène-acétate de vinyle (EVA), de préférence au moyen d'une technique de thermoformage.

9. Berceau selon l'une quelconque des revendications précédentes, dans lequel la seconde coque est formée d'un seul tenant, dans lequel la seconde coque est formée à partir d'un ou plusieurs des matériaux du groupe constitué par le polypropylène expansé (EPP), le polystyrène expansé (EPS) et une mousse de polyuréthane.

10. Berceau selon l'une quelconque des revendications précédentes, dans lequel le tissu de revêtement comprend un ou plusieurs matériaux du groupe constitué par des tissus naturels tels que le coton, la laine, la soie ou le lin, mais également des tissus synthétiques tels que le polyamide, le polyester, le polyacrylique, l'aramide ou l'élasthanne.

11. Berceau selon l'une quelconque des revendications précédentes, dans lequel la seconde coque comprend une ou plusieurs ouvertures (16), le berceau comprend en outre :
une ou plusieurs structures de serrage (6, 7, 8, 9) pour serrer le tissu de revêtement sur la seconde coque ;
des moyens d'arrimage (17, 18) pour arrimer les structures de serrage à la seconde coque à travers les une ou plusieurs ouvertures.

12. Berceau selon la revendication 11, dans lequel :
les moyens d'arrimage comprennent un rivet, tel qu'un rivet plein ou un rivet aveugle ;
les une ou plusieurs structures de serrage (7, 8, 9) comprennent une paire de parties de serrage (7, 8, 9) coopérantes, dans lequel les moyens d'arrimage (17, 18) sont de préférence couplés à demeure ou reliés d'un seul tenant à au moins une partie de serrage ; et/ou
le berceau comprend en outre un bras de support (10) à l'aide duquel le berceau peut être porté, et dans lequel les une ou plusieurs structures de serrage comprennent des points de fixation pour le bras de support ; et/ou
les une ou plusieurs structures de serrage comprennent des structures de support pour placer le berceau sur une surface.

13. Berceau selon l'une quelconque des revendications précédentes, dans lequel le berceau est représenté sous la forme d'une nacelle, dans lequel le berceau comprend une doublure interne qui est couplée de façon libérable à la seconde coque ou au cadre de mise en tension.

14. Dispositif (300) pour transporter un enfant, tel qu'une poussette ou un landau, comprenant un cadre et un berceau tels que définis à l'une quelconque des revendications précédentes, dans lequel le berceau est de préférence couplé de façon libérable au cadre.

15. Procédé pour fabriquer un berceau, comprenant :
la fourniture d'un cadre de mise en tension sensiblement rigide ;
la fourniture d'un tissu de revêtement souple, dont un bord est relié à demeure au cadre de mise en tension, moyennant quoi le cadre de mise en tension et le tissu de revêtement souple forment une première coque, dans lequel une ligne de séparation est agencée ou fabriquée dans le tissu de revêtement, ligne le long de laquelle des parties de tissu de revêtement reposant de chaque côté de la ligne de séparation ne sont pas reliées d'un seul tenant l'une à l'autre, et dans lequel des moyens de couplage sont agencés au niveau de la position de la ligne de séparation pour coupler les parties de tissu de revêtement l'une à l'autre ;
la fourniture d'une seconde coque, sensiblement ferme qui est pourvue sur un côté supérieur d'un bord périphérique ;
le fait d'amener ou de maintenir les moyens de couplage dans un état ouvert, moyennant quoi une ouverture est créée dans le tissu de revêtement ;
le placement de la seconde coque à travers l'ouverture et le placement du bord périphérique de la seconde coque en liaison contre le cadre de mise en tension ;
le fait d'amener les moyens de couplage dans un état fermé de sorte que la seconde coque soit serrée entre le cadre de mise en tension et le tissu de revêtement et de sorte que le tissu de revêtement couvre une surface externe de la seconde coque.
